Europäisches Patentamt

European Patent Office

Office européen des brevets

(11) Veröffentlichungsnummer: **0 090 307**
**B1**

(12) **EUROPÄISCHE PATENTSCHRIFT**

(45) Veröffentlichungstag der Patentschrift:
11.06.86

(21) Anmeldenummer: 83102766.9

(22) Anmeldetag: 21.03.83

(51) Int. Cl.⁴: **B 01 J 20/32**

(54) Verfahren zum Verfestigen der Oberflächen von körnigen Adsorbentien.

(30) Priorität: 31.03.82 DE 3211900

(43) Veröffentlichungstag der Anmeldung:
05.10.83 Patentblatt 83/40

(45) Bekanntmachung des Hinweises auf die Patenterteilung:
11.06.86 Patentblatt 86/24

(84) Benannte Vertragsstaaten:
BE DE FR GB IT NL

(56) Entgegenhaltungen:
EP - A - 0 043 464
DE - A - 2 946 645
US - A - 2 988 782

CHEMICAL ABSTRACTS, Band 82, 1975, Seite 119, Nr.
75025p, Columbus, Ohio, US

(73) Patentinhaber: BASF Aktiengesellschaft,
Carl-Bosch-Strasse 38, D-6700 Ludwigshafen (DE)

(72) Erfinder: Haas, Franz, Dr., Mohnstrasse 17,
D-6700 Ludwigshafen (DE)
Erfinder: Janisch, Gerhard, Dr., Osloer Weg 44,
D-6700 Ludwigshafen (DE)
Erfinder: Schreyer, Gerold, Ungsteiner Strasse 6,
D-6700 Ludwigshafen (DE)

## Description

Adsorbentien, wie z.B. Aktivkohlen, die meist in körniger Form bei technischen Adsorptionsverfahren eingesetzt werden, neigen häufig dazu, zu stauben, insbesondere bei mechanischer Beanspruchung, wie sie beim Einfüllen in Adsorptionseinrichtungen oder ganz besonders beim Einsatz in einer bewegten Schicht auftreten. Der bei einer derartigen mechanischen Beanspruchung auftretende Abrieb kann bei weiteren Verfahrensschritten stark stören. Insbesondere kann ein derartiger Abrieb den Einsatz vieler körniger Adsorbentien in der bewegten Schicht praktisch unmöglich machen.

In der europäischen patentanmeldung 83102765.1 (Veröffentlichungsnummer 0090306) wurde daher zum Verfestigen der Oberfläche von körnigen Adsorbentien schon vorgeschlagen, diese zunächst mit Wasser bis zu 25 - 70 % der möglichen Menge zu sättigen, auf eine Temperatur zu erhitzen, bei der das aufgenommene Wasser verdampft, sie dann unter Mischen mit wäßrigen Dispersionen von selbstvernetzenden Copolymerisaten zu behandeln und die so behandelten Adsorbentien auf Temperaturen von 110 bis 180°C zu erhitzen, um die Copolymerisate zu vernetzen.

Der vorliegenden Erfindung liegt daher die Aufgabe zugrunde, die Oberfläche körniger Adsorbentien derart zu verfestigen, daß ein Abrieb, der bei mechanischer Beanspruchung, insbesondere in einer bewegten Schicht, eintritt, zumindest stark vermindert wird.

Die Aufgabe wird erfindungsgemäß dadurch gelöst, daß man die Adsorbentien, die zunächst praktisch kein Wasser enthalten,

(1) so unter Mischen mit 1 bis 30 gew.%igen wäßrigen Suspensionen von fadenförmigen Gebilden aus selbstvernetzenden Copolymerisaten behandelt, daß die körnigen Adsorbentien aus der Suspension Wasser aufnehmen und sich die suspendierten fadenförmigen Gebilde dabei gleichzeitig auf den Oberflächen der Adsorbentien abscheiden und wobei die Adsorbentien rieselfähig bleiben,

(2) das von den Adsorbentien aufgenommene Wasser verdampft und

(3) die mit fadenförmigen Gebilden bedeckten Adsorbentien. auf Temperaturen von 110 bis 180°C erhitzt, um die Copolymerisate zu vernetzen.

Körnige Adsorbentien, die technisch von Bedeutung sind und deren Oberflächen erfindungsgemäß verfestigt werden können, sind beispielsweise kohlenstoffhaltige Adsorbentien, wie Aktivkohle, Aktivkoks und Kohlenstoffmolekularsiebe, Aktivtonerden, die z.B. durch Entwässern und Kalzinieren von Aluminiumhydroxid erhalten werden, Kieselgele und Molekularsiebzeolithe, die sich von natürlichen oder synthetischen, hydratisierten Alumosilikaten ein- oder mehrwertiger Basen ableiten. Von den körnigen Adsorbentien werden vorzugsweise Aktivkohlen verwendet. Die innere Oberfläche der Aktivkohle liegt im allgemeinen zwischen 400 und 1600 $m^2/g$, während die innere Oberfläche der übrigen Adsorbentien in dem Bereich von 100 bis 1000 $m^2/g$ beträgt.

Der mittlere Teilchendurchmesser der körnigen Adsorbentien beträgt 0,5 bis 9, vorzugsweise 2 bis 5 mm.

Um die Oberflächen der körnigen Adsorbentien zu verfestigen, überzieht man sie zunächst netzartig mit einem fadenförmigen, thermoplastischen Copolymerisat, das selbstvernetzend ist, und erhitzt dann das so behandelte Material auf Temperaturen, bei denen die Copolymerisate vernetzen. Sie sind danach nicht mehr thermoplastisch.

Fadenförmige, selbstvernetzende Copolymerisate, die auch als Fibrids oder Fibrillen bezeichnet werden, können beispielsweise nach bekannten Verfahren aus Dispersionen von selbstvernetzenden Copolymerisaten hergestellt werden.

Kennzeichnend für diese Copolymerisate ist die Anwesenheit von solchen Gruppierungen, die beim Erhitzen auf Temperaturen von 110 bis 180°C miteinander unter Vernetzung reagieren, z.B. Carboxylgruppen und (Meth)acrylamidgruppen wie sie beispielsweise in Copolymerisaten vorliegen, die eine ethylenisch ungesättigte Carbonsäure und (Meth)acrylamid einpolymerisiert enthalten oder von N-Methylol- und/oder N-Methylolethergruppen. Derartige Comonomere, die diese Gruppen enthalten, sind vor allem N-Methylolamide von $\alpha$, $\beta$-monoolefinisch ungesättigten 3 bis 5 C-Atome enthaltenden Mono- und/oder Dicarbonsäuren, insbesondere N-Methylolacrylamid, N-Methylolmethacrylamid und N-Methylolfumarsäurediamid sowie die entsprechenden Ether, wie N-Alkoxymethylamide, monoolefinisch ungesättigten Mono- und Dicarbonsäuren mit i bis 4 C-Atomen in den Alkylresten, z.B. N-Methoxymethylacrylamid, N-Methoxymethyl-methacrylamid, N-Ethoxymethylmethacrylamid, N-n-Butoxymethylacrylamid und N-Tsopropoxymethyl-methacrylamid. Die Menge derartiger vernetzend wirkender Monomerer liegt im allgemeinen zwischen 0,5 und 10, insbesondere zwischen 1 und 6 Gew.%, bezogen auf die Copolymerisate.

Zusätzlich können die Copolymerisate auch noch in Mengen von 0 bis 5 Gew.% monoolefinisch ungesättigter Carbonsäuren der genannten Art, z.B. Acryl- und/oder Methacrylsäure, und/oder deren Amide einpolymerisiert enthalten.

Hauptbestandteile der Copolymerisate sind die folgenden Monomeren bzw. deren Mischungen in copolymerisierter Form: Styrol, Acrylnitril, Vinylchlorid, Vinylidenchlorid, Vinylester von $C_1$- bis $C_4$-gesättigten Carbonsäuren, Acrylsäure- und Methacrylsäureester von einwertigen $C_1$- bis $C_{12}$-Alkoholen, Methacrylnitril und Butadien-1,3, Mischungen aus Styrol und Butadien, Styrol und Acrylnitril, Styrol und Methacrylnitril, Butadien und (Meth)acrylnitril, Styrol und (Meth)acrylsäureestern, Vinylacetat und (Meth)acrylestern sowie Styrol, Acrylsäureester und Acrylnitril. Diese Gruppe von Monomeren ist zu 90 bis 99,5 Gew.% am Aufbau der Copolymerisate beteiligt.

Die Copolymerisate werden nach bekannten Verfahren in Form von etwa 40 bis 55 gew.%igen wäßrigen Dispersionen hergestellt, die aufgrund des Herstellungsverfahrens übliche Hilfsstoffe, wie anionische oder nichtionische Emulgatoren enthalten. Solche selbstvernetzenden Polymerisatdispersionen sind im Handel erhältlich.

Um aus diesen Dispersionen Fasern (bzw. Fibrids oder Fibrillen) herzustellen, erhöht man durch Zusatz von Verdickungsmitteln die Viskosität der Dispersionen. Die verdickten Dispersionen enthalten 0,05 bis 10, vorzugsweise 0,2 bis 5 Gew.% an hochmolekularen synthetischen Verdickungsmitteln, z.B. hochmolekularen Polymerisaten der Acrylsäure und Methacrylsäure, die durch Copolymerisieren von Acrylsäure oder Methacrylsäure mit Verbindungen, die mindestens zwei ethylenisch ungesättigte Doppelbindungen enthalten, wie Divinyldioxan, Divinylbenzol oder Tri- und Tetraallylether von Sorbit oder Fructose in Mengen von 0,5 bis 10 Gew.% hergestellt werden. Andere geeignete Verdickungsmittel sind hochmolekulares Polyacrylamid und hochmolekulare Ethylenoxide.

Eine andere Gruppe von Polymerisatdispersionen, die für die Herstellung von Fibrillen bzw. Fibrids geeignet ist, sind Dispersionen von selbstvernetzenden Polymerisaten, die unter Scherbeanspruchung - d.h. Bedingungen, wie sie bei der Herstellung der Fibrillen bzw. Fibrids herrschen - verdicken. Solche Dispersionen sind beispielsweise aus der EP-Anmeldung 43 464 bekannt. Sie haben innerhalb eines bestimmten Konzentrationsbereichs dilatantes Fließverhalten, d.h. sie verdicken unter mechanischer Beanspruchung oder anders ausgedrückt, ihre Viskosität steigt mit zunehmender Scherung, ohne daß dabei eine meßbare Zeitabhängigkeit vorliegt. Diese Dispersionen enthalten 1 bis 10 Gew.%, bezogen auf den Polymerisatgehalt, α,β-monoolefinisch ungesättigte Mono- und/oder Dicarbonsäuren mit 3 bis 5 C-Atomen mit anderen monoolefinisch ungesättigten Monomeren sowie 0 bis 5 Gew.% mehrfach olefinisch ungesättigte Monomeren einpolymerisiert. Sie sind bereits dann als selbstvernetzend anzusprechen, wenn sie als andere monoolefinisch ungesättigte Monomere 1 bis 10 Gew.% eines Amids einer ethylenisch ungesättigten Carbonsäure, wie Acrylsäure- oder Methacrylsäureamid, einpolymerisiert enthalten. Von diesen Dispersionen kommen für die Verfestigung der Oberflächen körniger Adsorbentien vorzugsweise diejenigen in Betracht, die als andere monoolefinisch ungesättigte Monomeren 0,5 bis 10 Gew.% N-Methylolamide von ethylenisch ungesättigten Carbonsäuren mit 3 bis 5 C-Atomen bzw. deren Veretherungsprodukte neben anderen Monomeren, wie Styrol, Acrylnitril, (Meth)acrylestern, Vinylchlorid, Vinylidenchlorid und Vinylestern enthalten. Die dilatanten Dispersionen werden gemäß der EP-Anmeldung 43 464 erhalten, indem man die Monomeren in wäßriger Emulsion unter gleichzeitigem Agglomerieren bei nur partiellem Verschmelzen der zunächst entstandenen Polymerteilchen eines Durchmessers von 5 bis 200 nm bei einer Temperatur nahe der Glastemperatur des entstehenden Copolymerisates copolymerisiert und dann den Copolymerisatgehalt der entstandenen wäßrigen Copolymerisatdispersion auf 35 bis 55 Gew.% und den pH-Wert auf 3 bis 5 einstellt oder das Wasser ganz oder teilweise durch ein mit Wasser mischbares und das Copolymerisat nicht lösendes oder quellendes Lösungsmittel ersetzt.

Die Herstellung der fadenförmigen Produkte (Fibrillen bzw. Fibrids) aus den oben beschriebenen verdickten, selbstvernetzenden Copolymerisatdispersionen oder den dilatanten, ebenfalls selbstvernetzende Gruppen enthaltenden Copolymerisatdispersionen erfolgt in an sich üblicher Weise durch Zusammenbringen von anionische oder nichtionische Dismergiermittel enthaltenden Polymerisatdispersionen mit wäßrigen Lösungen kationischer Fällmittel (kationischen Fällbädern) unter dem Einfluß von Scherkräften unter Bildung von Fasern. Das Verfahrensprinzip ist beispielsweise aus der US-PS 2 988 782 und der GB-PS 1 461 794 bekannt. Das Verfahren zur Herstellung von thermoplastischen, vernetzbaren Bindefasern bzw. Fibrids oder Fibrillen ist Gegenstand der älteren EP-Anmeldung 82 106 302.1 (veröffentlicht unter der Nr. 71086), auf die hier Bezug genommen wird. Es sei jedoch noch erwähnt, daß als kationische Fällbäder etwa 0,5 bis 10, vorzugsweise 1 bis 5 Gew.% eines hoch- oder niedrigmolekularen Stoffes enthaltende wäßrige Lösungen in Betracht kommen, z.B. wäßrige Lösungen von Kondensationsprodukten aus Polyaminen und Dicarbonsäuren, die mit Epichlorhydrin vernetzt (Polyamidoamino-Epichlorhydrinharze) und mit Säuren wie Schwefelsäure oder Phosphorsäure neutralisiert sind, neutralisierte Polyethylenimine oder auch andere Alkylarylammoniumsalze, wie Trimethylbenzylammoniumchlorid.

Nach dem oben beschriebenen Verfahren erhält man Fasern aus Dispersionen von thermoplastischen, selbstvernetzenden Copolymerisaten. Diese Fasern, die auch Fibrillen oder Fibrids genannt werden, haben einen Durchmesser von 0,3 bis 1, vorzugsweise 0,3 bis 0,6 mm und eine Länge von 0,5 bis 12, vorzugsweise 1 bis 6 mm.

Die Fasern können direkt in Form der bei der Herstellung erhaltenen Suspensionen zur Verfestigung der Oberflächen von körnigen Adsorbentien eingesetzt werden. Die Suspensionen enthalten 1 bis 30, vorzugsweise 10 bis 15 Gew.% der thermoplastischen, vernetzbaren Fasern. Die praktisch trockenen, körnigen Adsorbentien werden unter Mischen mit den wäßrigen Suspensionen der oben beschriebenen fadenförmigen Gebilde aus selbstvernetzenden Copolymerisaten behandelt. Vorzugsweise werden die Fasersuspensionen auf die Adsorbentien gegossen, die ihrerseits gerührt oder anderweitig bewegt bzw. umgewälzt werden. Die Adsorbentien bleiben während dieser Behandlung rieselfähig. Die Menge der wäßrigen Fasersuspension, bezogen auf körniges Adsorbens, wird so gewählt, daß der Sättigungsgrad des Adsorbens für Wasser 80 Gew.% beträgt. Man erhält auf diese Weise netzartig mit thermoplastischen, vernetzbaren Fasern überzogene körnige Adsorbentien. In einer bevorzugten Ausführungsform der Herstellung solcher netzartiger Überzüge verwendet man bereits Wasser enthaltende körnige Adsorbentien oder besprüht sie zunächst mit Wasser, wobei man durch Rühren oder Schütteln der Adsorbentien für eine gleichmäßige Verteilung des Wassers sorgt. Die Menge an Wasser beträgt 1 bis 20, vorzugsweise 5 bis 10 Gew.% derjenigen Menge an Wasser, die das körnige Adsorbens bis zur vollständigen Füllung der inneren Poren und Kanäle aufnehmen kann. Die Sättigungsmengen sind, bezogen auf das Gewicht der Stoffe, bei den einzelnen Adsorbentien unterschiedlich. Einige körnige Aktivkohlesorten können z.B. 1 Gew.teil Wasser pro 1 Gew.teil Kohle aufnehmen, um die inneren Poren und Kanäle der Kohle vollständig mit Wasser zu füllen und dennoch rieselfähig zu sein.

Eine Behandlung der körnigen Adsorbentien mit Wasser vor der Behandlung mit Fasersuspensionen kommt vor allem dann in Betracht, wenn man zur Herstellung des netzartigen Faserüberzugs auf den Adsorbentien von Fasersuspensionen einer Konzentration von 15 bis 30 Gew.% Fasern ausgeht. Das Gewichtsverhältnis von Fasern zu den körnigen Adsorbentien, die mit den Fasern beschichtet sind, beträgt etwa 2:98 bis 30:70 und liegt vorzugsweise in dem Bereich von 3:97 bis 10:90.

Nachdem man die Adsorbentien mit den Fasersuspensionen behandelt hat, wird den Adsorbentien das Wasser, das sie aufgenommen haben, entzogen. Dieser Verfahrensschritt wird entweder bei Normaldruck und Temperaturen oberhalb von 100°C oder unter vermindertem Druck zwischen Raumtemperatur und 100°C oder nach anderen bekannten Trocknungsmethoden durchgeführt. Sofern das mit Fasern überzogene Adsorbens zum Entfernen des Wassers nicht längere Zeit auf Temperaturen oberhalb 110°C erhitzt wird, sind die Copolymerisate, aus denen die Fasern bestehen, noch thermoplastisch. Das Verdampfen des Wassers aus den Adsorbentien ist erforderlich, um ein vollständiges Bedecken der Poren oder Kanäle auf der Oberfläche der Adsorbentien mit fadenförmigen Copolymerteilchen während des Erhitzens auf Vernetzungstemperatur der Copolymerisate zu verhindern.

In einem weiteren Verfahrensschritt, der unabhängig vom Verdampfen des Wassers aus den Adsorbentien oder vorzugsweise direkt im Anschluß an diesen Trocknungsschritt durchgeführt wird, erfolgt die Vernetzung des Copolymerisates, das in Form eines Netzwerkes bzw. porösen Überzuges auf den Oberflächen der körnigen Adsorbentien haftet. Dazu erhitzt man die so beschichteten körnigen Adsorbentien auf Temperaturen von 110 bis 180, vorzugsweise 120 bis 150°C. Nach der thermischen Behandlung sind die Copolymerisate auf den Adsorbentien fest verankert, nicht mehr schmelzbar und in organischen Lösungsmitteln, wie z.B. Benzol, Toluol oder chlorierten Kohlenwasserstoffen unlöslich.

Nach dem neuen Verfahren werden körnige Adsorbentien erhalten, deren Oberflächen hervorragend verfestigt sind, ohne daß hierdurch die Adsorptionsfähigkeit wesentlich beeinträchtigt wird. Dagegen wird hierdurch der Abriebverlust außerordentlich stark vermindert, so daß die erfindungsgemäß hergestellten körnigen Adsorbentien in bewegten Betten für die Adsorption eingesetzt werden können.

Die in den folgenden Beispielen angegebenen Teile und Prozente beziehen sich das Gewicht.

Herstellung der Suspensionen von fadenförmigen Gebilden (Fibrillen)

**Suspension 1**

Die Suspension 1 der Fibrillen wurde nach dem Verfahren der Patentanmeldung DE-A- 3 128 871 durch Einbringen einer Mischung aus (a) 220 Teilen einer anionisch eingestellten 45%igen wäßrigen Dispersion eines Copolymerisates aus 53 % n-Butylacrylat, 29 % Styrol, 13 % Acrylnitril, 4 % N-Methylolmethacrylamid und 1 % Acrylsäure, (b) 18 Teilen Wasser und (c) 2 Teilen einer 25%igen wäßrigen Lösung eines hochmolekularen Natriumpolyacrylats in ein katioisches Fällbad, in dem die fadenziehende Mischung aus (a) - (c) koaguliert und geschert wurde, hergestellt. Als kationisches Fällbad wurde eine 0,6%ige wäßrige Polyethyleniminlösung verwendet. Mit Hilfe eines für die Zerfaserung üblichen Drehtellers werden Fibrillen eines mittleren Durchmessers von 0,5 bis 1 mm und einer durchschnittlichen Länge von 3 bis 5 mm erhalten. Es wurde nach dem Absetzen der Fasern so viel Wasser abdekantiert, bis die Faserkonzentration in der Suspension 10 % betrug.

**Suspension 2**

Man verwendete zur Herstellung der 10%igen wäßrigen Suspension 2 nach dem oben unter Suspension 1 beschriebenen Verfahren anstelle der dort genannten Dispersion eine 50%igen wäßrige Dispersion eines Copolymerisates aus 50 % Butadien, 40 % Styrol, 5 % Acrylsäure und 5 % N-Methylolmethacrylamid.

**Suspension 3**

Die Herstellung dieser Suspension erfolgte wie die der Suspension 1, jedoch verwendete man anstelle der dort genannten Dispersion eine 40%ige wäßrige Dispersion eines Copolymerisates aus 65 % Butadien, 30 % Acrylnitril und 5 % N-Methylolacrylamid.

**Suspension 4**

Die Herstellung dieser Suspension erfolgte wie die der Suspension 1, jedoch verwendete man anstelle der dort genannten Dispersion eine 50%ige wäßrige Dispersion eines Copolymerisates aus 80 % Vinylacetat, 17 % n-Butylacrylat und 3 % N-Methylolacrylamid.

**Suspension 5**

Die Herstellung dieser Suspension erfolgte wie die der Suspension 1, jedoch verwendete man a) anstelle der dort genannten Dispersion eine 50%ige Dispersion eines Copolymerisats aus 80 % Styrol, 12 % Ethylacrylat, 3 % Acrylsäure, 3 % Methacrylamid und 2 % Maleinsäure mit einer kritischen Schergeschwindigkeit von ca. 5 sec$^{-1}$ bei Raumtemperatur und b) anstelle der wäßrigen Polyethyleniminlösung eine 0,25%ige wäßrige Lösung eines Copolymerisatz aus Ethylacrylat/Diethylamino-ethylacrylat.

**Beispiel 1**

100 Teile einer praktisch trockenen Aktivkohle, die einen mittleren Teilchendurchmesser von 4 mm und eine innere Oberfläche von 1300 m$^2$/g hatte, wurden bei Raumtemperatur unter langsamem Rühren mit 110 Teilen der 10%igen wäßrigen Suspension 1 begossen, wobei die körnige Aktivkohle das Wasser rasch aufsaugte und die Fibrillen auf die Oberflächen der Aktivkohle aufzogen.

Die so beschichtete körnige Aktivkohle wurde dann unter mehrmaligem Wenden in einem 140°C heißen Luftstrom getrocknet, wobei das aufgenommene Wasser verdampfte und das Copolymerisat vernetzte. Der Trocken- und Vernetzungsprozeß dauerte 5 Minuten. Man erhält auf diese Weise die beschichtete körnige Aktivkohle mit einem Gewichtsverhältnis von Fasern zu Kohle von 10:90.

Die Adsorptions- und Desorptionseigenschaften der beschichteten körnigen Aktivkohle entsprechen praktisch denen der als Ausgangsprodukt eingesetzten Aktivkohle gleicher Körnung. Die Abriebverluste der beschichteten Aktivkohle sind dagegen überraschend verbessert.

**Beispiel 2**

100 Teile einer praktisch trockenen Aktivkohle, die einen mittleren Teilchendurchmesser von 4 mm und eine innere Oberfläche von 900 m$^2$/g hatte, wurden bei Raumtemperatur unter langsamem Rühren mit 75 Teilen der 10%igen wäßrigen Suspension 2 begossen. Die körnige Aktivkohle saugte das Wasser rasch auf, während die Fibrillen, die aus der Suspension auf die Oberfläche der körnigen Aktivkohle aufzogen. Die so beschichtete körnige Aktivkohle wurde dann unter mehrmaligem Wenden in einem 150°C heißen Luftstrom getrocknet, wobei das aufgenommene Wasser verdampfte und das Polymerisat vernetzte. Für den Trocken- und Vernetzungsvorgang für das Polymerisat benötigte man 4 Minuten. Man erhielt auf diese Weise eine beschichtete körnige Aktivkohle mit einem Gewichtsverhältnis von Fasern zu Kohle von 7:93.

**Beispiel 3**

100 Teile einer praktisch trockenen Aktivkohle, die einen mittleren Teilchendurchmesser von 4 mm und eine innere Oberfläche von 1500 m$^2$/g hatte, wurden bei Raumtemperatur mit 10 Teilen Wasser besprüht. Während des Besprühens wurde für eine gute Durchmischung der körnigen Teilchen gesorgt, so daß sich das Wasser gleichmäßig auf der Aktivkohle verteilen konnte. Dann gab man, ebenfalls bei Raumtemperatur, unter langsamem Rühren 45 Teile der Suspension 1 vorsichtig hinzu. Die Aktivkohle nahm weiteres Wasser aus der Suspension auf und die Fasern der Suspension hafteten auf den Oberflächen der körnigen Aktivkohle. Bei diesem Beschichtungsvorgang blieb die Aktivkohle rieselfähig.

Die so beschichtete körnige Aktivkohle wurde dann in einem anschließenden Vorgang 4 Minuten lang mit einem 140°C heißen Luftstrom behandelt. Hierbei verdampfte zunächst das Wasser aus der Aktivkohle. Nach dem Verdampfen des Wassers stieg die Temperatur der körnigen Schüttung auf 120°C an, wobei eine Vernetzung des Copolymerisates eintrat. Man erhielt auf diese Weise eine beschichtete körnige Aktivkohle mit einem Gewichtsverhältnis von Fasern zu körniger Aktivkohle von 5:95. Die Adsorptions- und Desorptionseigenschaften der beschichteten Aktivkohle entsprachen praktisch denen der als Ausgangsmaterial eingesetzten Aktivkohle, während der Abrieb bei mechanischer Beanspruchung in unerwarteter Weise gesteigert war.

**Beispiel 4**

100 Teile einer Aktivkohle, die einen mittleren Teilchendurchmesser von 4 mm und eine innere Oberfläche von 1500 m$^2$/g hatte, wurden bei Raumtemperatur gleichmäßig mit 10 Teilen Wasser beladen. Dies geschah in der Weise, daß man Wasser auf die Oberfläche der Aktivkohle sprühte und die Kohle vorsichtig rührte. Danach wurde die mit Wasser behandelte Aktivkohle mit 65 Teilen der 10%igen Suspension 4 behandelt. Hierzu wurde die körnige Aktivkohle unter vorsichtigem Zumischen der Suspension 4 in Kontakt gebracht. Die Aktivkohle nahm das Wasser rasch auf und überzog sich mit den Fasern der Suspension 4. Nachdem die gesamte Menge der Suspension 4 zugegeben war, war die körnige Aktivkohle noch rieselfähig. Sie wurde in einem weiteren Verfahrensschritt 5 Minuten mit Infrarotwärme auf eine Temperatur von 140°C erhitzt, wobei zunächst das Wasser verdampfte und anschließend eine Vernetzung des Copolymerisats, aus dem die Fasern bestanden, eintrat. Man erhielt eine an der Oberfläche verfestigte Aktivkohle, bei der das Verhältnis von Fasern zu Kohle 7:93 betrug. Die Abriebverluste der beschichteten Aktivkohle waren gegenüber dem unbeschichteten Material überraschend verbessert, während die Adsorptions- und Desorptionseigenschaften der beschichteten Kohle gegenüber der unbeschichteten Kohle nur geringfügig verändert waren.

**Beispiel 5**

100 Teile einer Aktivkohle, die einen mittleren Teilchendurchmesser von 4 mm und eine innere Oberfläche von 1100 m²/g hatte, wurden mit 15 Teilen Wasser unter guter Durchmischung bei Raumtemperatur behandelt. Dann gab man bei einer Temperatur von 23°C unter ständigem Vermischen 55 Teile der Suspension 5 langsam hinzu. Das Wasser der Suspension wurde von der körnigen Aktivkohle spontan aufgenommen, während die Fasern an der Oberfläche der Aktivkohle hafteten. Die so beschichtete körnige Aktivkohle wurde anschließend in einen Luftstrom auf eine Temperatur von 130°C erhitzt. Dabei verdampfte das Wasser. Außerdem trat eine Vernetzung des Copolymerisates ein, aus dem die Fasern bestanden. Man erhielt eine netzartig beschichtete körnige Aktivkohle, deren Oberfläche verfestigt war und bei der das Gewichtsverhältnis von Fasern zu Kohle 5:95 betrug. Der Abrieb der so beschichteten Aktivkohle war überraschend geringer als derjenige der unbehandelten Kohle. Zu berücksichtigen ist dabei noch, daß die Adsorptions- und Desorptionseigenschaften der beschichteten Kohle gegenüber der unbeschichteten Kohle praktisch unverändert waren.

**Bestimmung des Abriebs von körniger Aktivkohle**

100 g einer praktisch trockenen Aktivkohle, die einen mittleren Teilchendurchmesser von 4 mm und eine innere Oberfläche von 1500 m²/g hatte, wurden in einen 1 l-Zylinder eingefüllt. Der Zylinder wurde verschlossen und 200 Stunden auf einen Rollstuhl laufen gelassen. Danach wurde der Abrieb durch Siebanalyse ermittelt. In diesem Fall waren nur noch 2 % der ursprünglich eingefüllten körnigen Aktivkohle unverändert vorhanden.

Der Abrieb einer gemäß Beispiel 3 beschichteten körnigen Aktivkohle wurde bestimmt, indem man 100 g des beschichteten Materials in einem 1 l-Zylinder einfüllte und ihn verschloß. Der Zylinder wurde dann ebenfalls 200 Stunden mit der gleichen Geschwindigkeit wie oben beschrieben, in einem Rollstuhl laufen gelassen. Danach wurde der Abrieb durch Siebanalyse ermittelt. Nach dieser Zeit lagen noch 98 % des ursprünglich eingesetzten körnigen Materials unverändert vor.

**Prüfung der Beladbarkeit mit Toluol**

Ein 1 l fassendes Adsorptionsrohr wurde mit einer praktisch trockenen Aktivkohle, die einen mittleren Teilchendurchmesser von 4 mm und eine innere Oberfläche von 1500 m²/g hatfe, vollständig gefüllt. Dann leitete man durch die Schüttung bei Raumtemperatur einen Luftstrom, der 1000 ppm Toluol enthielt. Die Aufnahme der körnigen Aktivkohle für Toluol betrug 46 Gew.%. Im Anschluß daran wurden nacheinander die körnigen Aktivkohlen eingesetzt, deren Oberfläche gemäß den Beispielen 1 bis 5 verfestigt waren und jedesmal die Aufnahme an Toluol geprüft. Die Ergebnisse sind in der Tabelle zusammengestellt.

**Tabelle**

Aufnahme von Toluol aus einem Toluol-Luft-Gemisch bei 20°C, jeweils 4 mm Durchmesser des Adsorbens

| körnige Aktivkohle gemäß Bsp. Nr. | Beladbarkeit [%] | | Abrieb [%] | |
|---|---|---|---|---|
| | behandelt | unbehandelt | behandelt | unbehandelt |
| 1 | 42 | 44 | <2 | >98 |
| 2 | 40 | 40 | <2 | " |
| 3 | 40 | 46 | <2 | " |
| 4 | 41 | 44 | <2 | " |
| 5 | 35 | 38 | <2 | " |

**Patentansprüche**

1. Verfahren zum Verfestigen der Oberflächen von körnigen Adsorbentien, **dadurch gekennzeichnet**, daß man die Adsorbentien, die zunächst praktisch kein Wasser enthalten,

(1) so unter Mischen mit 1 bis 30 gew.%igen wäßrigen Suspensionen von fadenförmigen Gebilden aus selbstvernetzenden Copolymerisaten behandelt, daß die körnigen Adsorbentien aus der Suspension Wasser aufnehmen und sich die suspendierten fadenförmigen Gebilde dabei gleichzeitig auf den Oberflächen der Adsorbentien abscheiden und wobei die Adsorbentien rieselfähig bleiben,

(2) das von den Adsorbentien aufgenommene Wasser verdampft und

(3) die mit fadenförmigen Gebilden bedeckten Adsorbentien auf Temperaturen von 110 bis 180°C erhitzt, um die Copolymerisate zu vernetzen.

2. Verfahren nach Anspruch 1, **dadurch gekennzeichnet**, daß die Menge der wäßrigen Suspension von fadenf Gebilden, bezogen auf Adsorbens, so gewählt wird, daß der Sättigungsgrad des Adsorbens für Wasser höchstens 80 Gew.% beträgt.

3. Verfahren nach Anspruch 1, **dadurch gekennzeichnet**, daß man die Adsorbentien, die zunächst praktisch kein Wasser enthalten, mit 1 bis 20 % der maximal möglichen Menge an Wasser behandelt, das sie aufnehmen können.

4. Verfahren nach den Ansprüchen 1 bis 3, **dadurch gekennzeichnet**, daß man als selbstvernetzende Copolymerisate diejenigen verwendet, die N-Methylol- und/oder N-Methylolethergruppen einpolymerisiert enthalten.

5. Verfahren nach den Ansprüchen 1 bis 4, **dadurch gekennzeichnet**, daß das Gewichtsverhältnis von Fasern zu den körnigen Adsorbentien 2:98 bis 30:70 beträgt.

## Claims

1. A process for consolidating the surface of a granular adsorbent, wherein the adsorbent, which initially contains virtually no water,

(1) is treated, while being mixed, with an aqueous suspension containing from 1 to 30% by weight of filamentary structures of self-crosslinking copolymers, in such a way that the granular adsorbent takes up water from the suspension and at the same time the suspended filamentary structures deposit on the surface of the adsorbent, the latter remaining free-flowing,

(2) the water taken up by the adsorbent is evaporated, and

(3) the adsorbent covered with the filamentary structures is heated at 110-180°C in order to crosslink the copolymer.

2. A process as claimed in claim 1, wherein the amount of the aqueous suspension of filamentary structures is so chosen, relative to the amount of adsorbent, that the degree of water saturation of the adsorbent is at most 80% by weight.

3. A process as claimed in claim 1, wherein the adsorbent, which initially contains virtually no water, is treated with from 1 to 20% of the maximum amount of water which it is able to take up.

4. A process as claimed in claims 1 to 3, wherein the self-crosslinking copolymer used contains N-methylol groups and/or N-methylol-ether groups as copolymerized units.

5. A process as claimed in claims 1 to 4, wherein the weight ratio of fibers to granular adsorbent is from 2:98 to 30: 70.

## Revendications

1. Procédé pour consolider les surfaces d'adsorbants granuleux, caractérisé en ce que les adsorbants qui, initialement, ne contiennent pratiquement pas d'eau,

(1) sont traités sous agitation avec des suspensions aqueuses d'une teneur de 1 à 30 % en poids d'éléments fibreux en copolymères auto-réticulants de telle façon que les adsorbants granuleux adsorbent de l'eau de la suspension et les éléments fibreux en suspension se déposent simultanément sur les surfaces des adsorbants, permettant de conserver à ceux-ci leur fluidité,

(2) puis on évapore l'eau adsorbée par les adsorbants et

(3) on provoque, par un chauffage des adsorbants enrobés d'éléments fibreux à des températures comprises entre 110 et 180°C, la réticulation des copolymères.

2. Procédé suivant la revendication 1, caractérisé en ce que la proportion de la suspension aqueuse d'éléments fibreux par rapport à l'adsorbant est choisie de manière à obtenir un degré de saturation de l'adsorbant en eau de 80 % en poids au maximum.

3. Procédé suivant la revendication 1, caractérisé en ce que les adsorbants qui, initialement, ne contiennent pratiquement pas d'eau, sont traités avec 1 à 20 % de la proportion maximale d'eau qu'ils sont à même d'adsorber.

4. Procédé suivant les revendications 1 à 3, caractérisé en ce que les copolymères auto-réticulants sont choisis parmi les copolymères, dans lesquels sont copolymérisés des groupes N-méthylol et(ou) N-méthylol-éther.

5. Procédé suivant les revendications 1 à 4, caractérisé en ce que le rapport pondéral des fibres aux adsorbants granuleux est compris entre 2: 98 et 30: 70.